# FASCICULE DE BREVET EUROPEEN

(11) **EP 3 287 864 B1**
(45) Date de publication et mention de la délivrance du brevet: **20.02.2019**
(21) Numéro de dépôt: 17187759.0
(22) Date de dépôt: 24.08.2017
(51) Int. Cl.: G05D 1/10, G05D 1/08, G08G 5/00, G01C 21/24, G01C 23/00

(54) **PROCÉDÉ D'AIDE AU PILOTAGE D'UN AÉRONEF, PRODUIT PROGRAMME D'ORDINATEUR ET DISPOSITIF D'AIDE AU PILOTAGE ASSOCIÉS**
VERFAHREN ZUR STEUERUNGSHILFE EINES LUFTFAHRZEUGS, ENTSPRECHENDES COMPUTERPROGRAMMPRODUKT UND ENTSPRECHENDE VORRICHTUNG ZUR STEUERUNGSHILFE
METHOD FOR AIDED-PILOTING AN AIRCRAFT, ASSOCIATED COMPUTER PROGRAM PRODUCT AND DEVICE FOR AIDED-PILOTING

(30) Priorité: 26.08.2016 FR 1601265
(43) Date de publication de la demande: 28.02.2018
(73) Titulaire: Thales, 92400 Courbevoie (FR)
(72) Inventeur: D'SILVA, Cédric, 31036 TOULOUSE CEDEX 1 (FR); SACLE, Jérôme, 31036 TOULOUSE CEDEX 1 (FR); ROSSI, Nicolas, 31036 TOULOUSE CEDEX 1 (FR)
(74) Mandataire: Lavoix

(56) Documents cités:
- FR-A1- 2 916 842
- US-A1- 2005 216 182
- US-A1- 2012 191 331

## Description

La présente invention concerne un procédé d'aide au pilotage d'un aéronef.

La présente invention concerne également un produit programme d'ordinateur et un dispositif d'aide au pilotage associés à un tel procédé.

On entend par « aéronef », un engin mobile piloté par un pilote et apte à voler notamment dans l'atmosphère terrestre, tel qu'un avion ou un hélicoptère, ou encore un drone. Le pilote exerce des commandes de pilotage pour piloter l'aéronef depuis un cockpit de cet aéronef ou de manière distante, depuis tout autre centre de pilotage adapté.

De manière connue en soi, chaque vol d'un aéronef est effectué selon un plan de vol comportant notamment une pluralité de positions planifiées de l'aéronef durant ce vol. Ces positions correspondent en particulier à des points de passage géographiques prédéterminés qui sont également connus sous le terme anglais « waypoint ». Chaque position représente de multiples paramètres de pilotage comme par exemple des paramètres géographiques bidimensionnels dans différents repères, des paramètres géographiques ou altimétriques relatifs à la hauteur ou à l'altitude de l'aéronef, des paramètres de temps ou encore des paramètres de vitesse dans différents repères.

Le plan de vol est déterminé avant le départ de l'aéronef et est déposé généralement auprès des autorités compétentes.

Le plan de vol peut par ailleurs avoir des modifications durant le vol. Ces modifications sont causées par exemple par des changements de conditions météorologiques, des changement du trafic aérien ou tout autre type de changements environnementaux, et sont transmises au pilote sous la forme de consignes à partir du sol.

Les consignes émises par un contrôleur aérien sont dites de type ATC (de l'anglais « Air Traffic Control »), c'est-à-dire, relatives au contrôle aérien.

Le contrôleur aérien transmet au pilote les consignes de type ATC soit via une liaison vocale mise en oeuvre par des moyens de radiocommunication, soit via une liaison de données permettant de transmettre des messages restituables en format textuel.

Ce dernier type de liaison est également connu sous le terme anglais « Data Link ».

À la réception d'une telle consigne, le pilote doit notamment vérifier la compatibilité de la consigne avec des capacités opérationnelles de l'aéronef ainsi qu'avec des restrictions imposées par le plan de vol courant de l'aéronef.

Ainsi, par exemple, ces restrictions concernent l'altitude de passage dans au moins certains points de passage ou encore la vitesse de passage dans ces points.

Concernant les capacités opérationnelles, le pilote doit notamment s'assurer que l'aéronef est apte à mettre en oeuvre une commande de pilotage correspondante pour respecter la consigne transmise. Ces capacités dépendent par exemple de la masse actuelle de l'aéronef, de son altitude maximale de vol, du carburant disponible, etc.

Le pilote détermine des conséquences que l'application de cette consigne peut avoir sur le plan de vol courant. Ces conséquences concernent généralement des paramètres associés au plan de vol, tels que le temps de vol jusqu'à un point de passage donné, la quantité de carburant disponible dans un tel point, etc.

Si la consigne est compatible, le pilote confirme la prise en compte de la consigne au contrôleur aérien et modifie le plan de vol courant en fonction de cette consigne.

On conçoit alors que ces opérations nécessitent des interprétations, des calculs et des actions manuelles et mentales de la part du pilote. Ces actions présentent par ailleurs une source d'erreurs considérable.

Pour pallier ces inconvénients, il existe déjà dans l'état de la technique des systèmes de traitement d'au moins certaines consignes transmises par le contrôle aérien. Ainsi, par exemple, ces systèmes peuvent être associés à un calculateur de type FMS (de l'anglais « Flight Management System ») qui intègre à l'aide du pilote les consignes reçues dans le plan de vol courant.

Toutefois, ces systèmes ne sont pas complètement satisfaisants. En particulier, ils ne permettent pas de dispenser le pilote de toute activité manuelle et/ou mentale nécessaire pour appliquer les consignes transmises.

La présente invention a pour but de proposer un procédé d'aide au pilotage d'un aéronef permettant de simplifier considérablement les activités manuelles et/ou mentales requises de la part du pilote à la réception d'une consigne destinée à modifier le plan de vol courant de l'aéronef.

À cet effet, l'invention a pour objet un procédé d'aide au pilotage d'un aéronef conforme à la revendication 1.

Suivant d'autres aspects avantageux de l'invention, le procédé comprend une ou plusieurs des caractéristiques des revendications 2 à 11.

L'invention a également pour objet un produit programme d'ordinateur comportant des instructions logicielles qui, lorsque mises en oeuvre par un équipement informatique, mettent en oeuvre un procédé tel que défini ci-dessus.

L'invention a également pour objet un dispositif d'aide au pilotage d'un aéronef conforme à la revendication 13.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un aéronef comportant un dispositif d'aide au pilotage selon l'invention ;
- la figure 2 est une vue schématique du dispositif d'aide au pilotage de la figure 1 ;
- la figure 3 est un organigramme d'un procédé d'aide au pilotage selon l'invention, le procédé étant mis en oeuvre par le dispositif de la figure 2 ; et
- la figure 4 est une vue schématique illustrant la mise en oeuvre de plusieurs étapes du procédé de la figure 3.

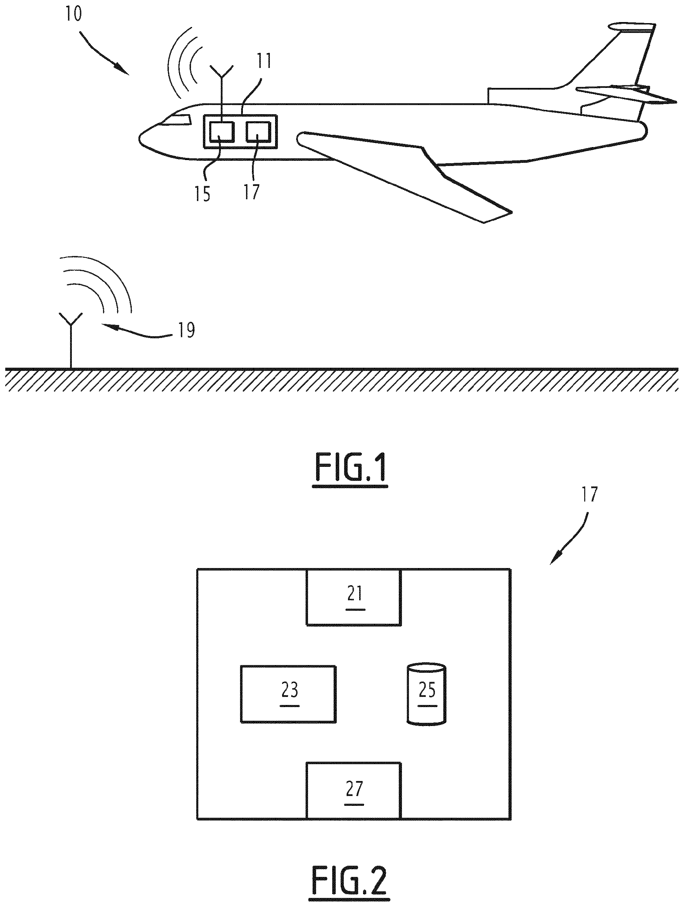

Dans l'exemple de réalisation de la figure 1, l'aéronef 10 est un avion piloté par au moins un pilote. De préférence, cet avion est un avion de ligne exploité par une compagnie aérienne.

En variante, l'aéronef 10 est un hélicoptère, ou encore un drone piloté à distance par un pilote.

L'aéronef 10 comporte un ensemble de systèmes 11 permettant son pilotage.

On entend ainsi par « système », un dispositif au moins partiellement électronique ou encore une association de tels dispositifs, embarqué dans l'aéronef 10 et permettant de piloter cet aéronef.

À titre d'exemple de tels systèmes, on peut notamment citer un système de gestion de vol (FMS, de l'anglais « Flight Management System »), un système de pilotage automatique (PA) ou encore un system de contrôle des radios (RMS, de l'anglais « Radio Management System ») présentant des associations de différents dispositifs mécaniques et électroniques, ou encore un train d'atterrissage ou tout type de becs et de volets présentant des associations de différents dispositifs mécaniques.

Le fonctionnement de chaque système est caractérisé par au moins une donnée de fonctionnement de ce système.

Ainsi, dans le précédent exemple, le fonctionnement par exemple des becs peut être caractérisé par une pluralité de données de fonctionnement dont chaque donnée de fonctionnement correspond à une position prédéterminée de ces becs.

L'ensemble de systèmes 11 met en oeuvre des capacités opérationnelles de l'aéronef 10.

On entend ainsi par « capacité opérationnelle », un ensemble de services fournis par au moins certains des systèmes de l'ensemble de système 11 et permettant au pilote de réaliser au moins une tâche de pilotage de l'aéronef 10.

Chaque capacité opérationnelle est alors déterminée par les données de fonctionnement du ou des systèmes mettant en oeuvre cette capacité.

De manière connue en soi, chaque vol de l'aéronef 10 est effectué selon un plan de vol déterminé préalablement et déposé auprès des autorités compétentes. Un plan de vol déposé est également connu sous l'abréviation anglaise FPL (« Flight Plan »).

Le plan de vol comporte une pluralité de points de passage planifiés de l'aéronef 10 via lesquelles il doit passer lors de son vol.

Ces points de passage correspondent à des positions géographiques connues et sont appelés également « waypoints » en anglais.

En fonction de l'avancement du vol, chaque point de passage est soit de type prévu, soit de type passé.

Ainsi, initialement, tous les points de passage du plan de vol sont de type prévu. Au fur et à mesure du passage de l'aéronef 10 par ces points lors de son vol, ces points deviennent de type passé.

Pour au moins certains des points de passage, le plan de vol comporte en outre une ou plusieurs contraintes. Ces contraintes sont notamment relatives à l'heure de passage, à la vitesse de passage ou encore à l'altitude de passage au point de passage correspondant.

Le plan de vol de l'aéronef 10 est par ailleurs associé à une pluralité de paramètres opérationnels. Chaque paramètre opérationnel est relatif au vol et/ou à l'aéronef.

Chaque paramètre opérationnel est par exemple relatif au temps de vol, au carburant disponible, à l'altitude de l'aéronef, à sa vitesse ou encore à sa masse.

De manière connue en soi, il existe des combinaisons de paramètres opérationnels qui atteignent des optima de fonctionnement. Les optimisations sont effectuées par des systèmes externes. Ainsi, par exemple, ces systèmes sont aptes à déterminer une combinaison de paramètres X, Y, Z et T correspondant respectivement à la vitesse de l'aéronef 10, à son altitude, à sa masse et à la température externe, sous lesquels les optima de fonctionnement sont atteints.

De manière connue en soi, il est possible de déterminer la valeur de chaque paramètre opérationnel dans chaque point de passage du plan de vol ou encore dans des points compris entre ces points de passage.

Lorsqu'il s'agit d'un point de passage de type prévu, la valeur de chaque paramètre opérationnel déterminée dans un tel point est une valeur prédite.

Lorsqu'il s'agit d'un point de passage de type passé, la valeur de chaque paramètre opérationnel déterminée dans un tel point est une valeur déterminée de manière certaine.

Ainsi, par exemple, la valeur numérique du paramètre opérationnel relatif au temps de vol déterminée dans un point du plan de vol de type prévu, correspond au l'heure prévue de passage de l'aéronef dans ce point.

De manière analogue, la valeur numérique du paramètre relatif au carburant, à l'altitude ou à la vitesse déterminée dans ce point de passage correspond aux prévisions respectivement du carburant disponible dans ce point, de l'altitude ou de la vitesse de l'aéronef 10 dans ce point.

En référence à la figure 1, l'ensemble de systèmes 11 de l'aéronef 10 comprend notamment un dispositif de communication 15 et un dispositif d'aide au pilotage 17.

Le dispositif de communication 15 permet la communication de différents systèmes de l'aéronef 10 avec un système externe à l'aéronef 10 comme par exemple une station au sol 19.

La communication s'effectue selon des méthodes connues en soi et comprend notamment la transmission de messages de type « Data link » entre la station au sol 19 et l'aéronef 10. Ces messages sont restituables en format textuel.

En particulier, au moins certains des messages issus de la station au sol 19 et reçus par le dispositif de communication 15 comprennent une consigne destinée à modifier le plan de vol courant de l'aéronef 10 lors de son vol.

Ainsi, par exemple, une telle cosigne concerne un changement de l'altitude de l'aéronef dans un point de passage du plan de vol, un changement d'un ou plusieurs points de passage, un changement du temps de passage, etc.

Bien entendu, tous ces changements concernent des points de passage de type prévu.

Le dispositif d'aide au pilotage 17 est illustré plus en détail sur la figure 2.

Ainsi, en référence à cette figure 2, le dispositif d'aide au pilotage 17 comprend un module d'acquisition 21, un module de traitement 23, une base de données 25 et un module d'affichage 27.

Le dispositif de pilotage 17 se présente par exemple sous la forme d'un calculateur indépendant comportant en outre une mémoire apte à stocker une pluralité de logiciels et un processeur mettant en oeuvre ces logiciels.

Selon une autre variante de réalisation, le dispositif de pilotage 17 est intégré dans un calculateur déjà existant tel que par exemple le calculateur mettant en oeuvre le système FMS.

Le module d'acquisition 21 est par exemple un module physique qui est connecté notamment au dispositif de communication 15 et apte à acquérir toute consigne reçue par ce dispositif et destinée à modifier le plan de vol de l'aéronef 10.

Le module d'acquisition 21 est apte à acquérir en outre le plan de vol courant de l'aéronef 10 ainsi que les données de fonctionnement de l'ensemble de système 11.

Le module de traitement 23 est par exemple un logiciel apte à traiter les informations acquises par le module d'acquisition 21 en mettant en oeuvre au moins certaines des étapes du procédé d'aide au pilotage selon l'invention.

La base de données est par exemple une partie de la mémoire comprenant une pluralité de critères d'optimisation. En particulier, chaque critère d'optimisation présente un certain nombre de règles ou de préférences qui doivent être respectées lors de la modification du plan de vol par une consigne acquise par le module d'acquisition 21.

Ces critères sont reconfigurables et peuvent par exemple être déterminés avant chaque vol.

Les critères d'optimisation sont par exemple déterminés par la compagnie aérienne exploitant l'aéronef 10 et permettent notamment d'optimiser le trajet de l'aéronef 10 selon des critères économiques et/ou de sécurité.

Le module d'affichage 27 est par exemple un écran d'affichage tactile permettant au pilote d'interagir avec le dispositif d'aide au pilotage 27. Ce module est notamment apte à afficher des résultats de la mise en oeuvre du procédé comme ceci sera expliqué par la suite.

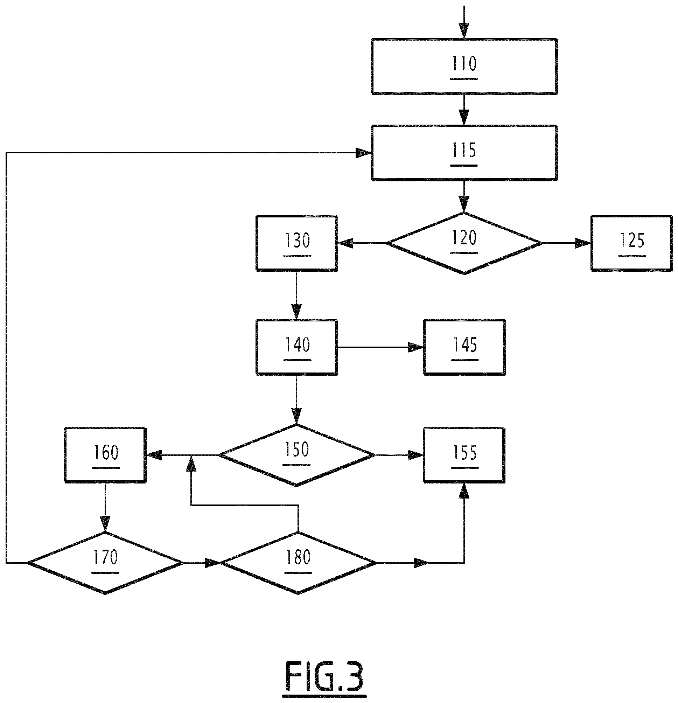

Le procédé d'aide au pilotage selon l'invention sera désormais expliqué en référence à la figure 3 présentant un organigramme de ses étapes.

Initialement, avant le départ de l'aéronef 10, un plan de vol est déterminé. Ce plan de vol est donc initialement le plan de vol courant de l'aéronef.

Les étapes suivantes du procédé sont mises en oeuvre lors du décollage, du vol ou de l'atterrissage de l'aéronef 10, à chaque réception d'une consigne par le dispositif de communication 15 qui est destinée à modifier le plan de vol courant de l'aéronef 10.

Ainsi, lors de l'étape 110, le module d'acquisition 21 acquiert une telle consigne ainsi que les données de fonctionnement de l'ensemble de systèmes 11 et le plan de vol courant de l'aéronef 10.

Puis, le module d'acquisition 21 transmet ces informations au module de traitement 23.

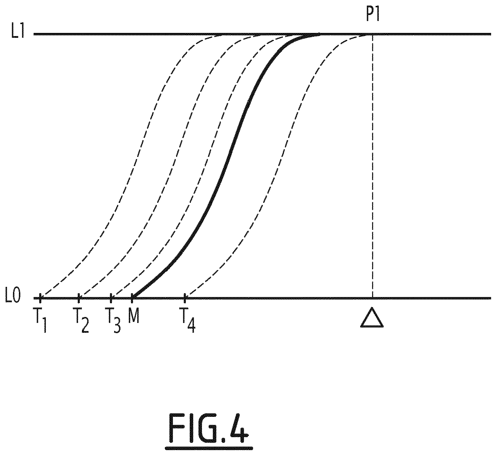

La consigne acquise est par exemple de type « *reach [level L1] before passing [position P1] »* ce qui signifie que l'aéronef 10 doit atteindre un niveau (altitude) L1 avant de passer par le point P1. Cette consigne est illustrée schématiquement sur la figure 4 sur laquelle le niveau L0 correspond au niveau courant de l'aéronef 10.

Lors de l'étape 115 suivante, le module de traitement 23 analyse la compatibilité de la consigne avec les capacités opérationnelles de l'aéronef 10 et avec les contraintes du plan de vol courant.

En particulier, lors de cette étape 115, le module de traitement 23 détermine une période d'applicabilité de la consigne.

La période d'applicabilité de la consigne comprend un ou plusieurs tronçons continus, chaque tronçon étant constitué d'une pluralité de moments d'applicabilité de la consigne.

Chaque moment d'applicabilité de la consigne est déterminé par rapport à un moment temporel du vol ou par rapport à un point de passage dans le plan de vol courant de l'aéronef 10. Chaque moment d'applicabilité est ainsi un moment temporel ou spatial.

Dans un tel moment d'applicabilité, la consigne acquise est compatible avec les capacités opérationnelles de l'aéronef 10 et avec les contraintes du plan de vol courant.

Une consigne est compatible avec les capacités opérationnelles de l'aéronef 10 lorsque l'ensemble de systèmes 11 permet de mettre en oeuvre cette consigne dans le moment d'applicabilité correspondant. Pour déterminer cela, le module de traitement 23 analyse les données de fonctionnement de l'ensemble de systèmes 11 et les valeurs des paramètres opérationnels dans ce moment d'applicabilité.

Une consigne est compatible avec les contraintes du plan de vol lorsque le résultat de sa mise en oeuvre dans le moment d'applicabilité correspondant est compatible avec les contraintes du plan de vol.

Dans l'exemple de la figure 4, lors de cette étape 115, le module de traitement 23 analyse notamment la compatibilité de la consigne avec la capacité de monter de l'aéronef 10. Cette capacité est analysée au vu des données de fonctionnement de l'ensemble de système 11 ainsi que des valeurs des paramètres opérationnels dans différents moments comme par exemple la masse de l'aéronef 10.

Ainsi, par exemple, lors de cette étape 115, une période d'applicabilité comprenant deux tronçons [T₁, T₂] et [T₃, T₄] est déterminée.

Chacun de ces tronçons [T₁, T₂] et [T₃, T₄] est constitué d'une pluralité de moments temporels d'applicabilité dans lesquels la consigne est compatible avec les capacités opérationnelles de l'aéronef 10 et avec les contraintes du plan de vol courant.

Lors de l'étape 120 suivante, le module de traitement 23 analyse la période de d'applicabilité déterminée.

Lorsque cette période ne comporte aucun moment d'applicabilité ou autrement dit, lorsque la période d'applicabilité est vide, le module de traitement 23 passe à l'étape 125.

Dans le cas contraire, le module de traitement 23 passe à l'étape 130.

Lors de l'étape 125, le module de traitement 23 notifie le pilote que la consigne acquise n'est pas compatible avec les capacités opérationnelles et/ou avec le plan de vol de l'aéronef 10.

Cette notification est notifiée au pilote via le module d'affichage 27 en indiquant éventuellement une ou plusieurs raisons d'incompatibilité.

Lors de l'étape 130, le module de traitement 23 détermine pour chaque moment d'applicabilité de la période d'applicabilité de la consigne, un plan de vol modifié en cas d'application de la consigne dans ce moment d'applicabilité.

Puis, pour chaque plan de vol modifié, le module de traitement 23 détermine des valeurs des paramètres opérationnels dans au moins certains points de passage de type prévu du plan de vol modifié ou encore dans des points compris entre ces points de passage.

Ainsi, le module de traitement 23 détermine par exemple le paramètre opérationnel relatif au temps de vol dans le point de passage correspondant à la destination finale de l'aéronef 10.

Lors de l'étape 140 suivante, le module de traitement 23 sélectionne un moment d'applicabilité optimal parmi l'ensemble des moments d'applicabilité.

Cette sélection est effectuée notamment en fonction des valeurs des paramètres opérationnels déterminées lors de l'étape 130 et en fonction des critères d'optimisation issus de la base de données 25.

En particulier, lors de cette étape 140, pour chaque moment d'applicabilité, le module de traitement 23 calcule des écarts entre les valeurs des paramètres opérationnels déterminées pour le plan de vol modifié correspondant à ce moment d'applicabilité et les valeurs correspondantes associées au le plan de vol courant.

Le module de traitement 23 vérifie en outre les règles ou les préférences d'optimisation imposées par les critères d'optimisation de la base de données 25.

En complément, le module de traitement 23 fait appel à des fonctions d'optimisation d'un autre système de l'aéronef 10 comme par l'exemple le système FMS.

Ainsi, dans l'exemple de la figure 4, le moment d'applicabilité M du tronçon [T₃, T₄] est sélectionné comme optimal. Ce moment permet par exemple d'assurer le temps d'arriver optimal selon des critères économiques de la compagnie aérienne exploitant l'aéronef 10.

Puis, lors de l'étape 145 suivante, le module de traitement 23 notifie au pilote les résultats d'optimisation des moments d'applicabilité en affichant sur l'écran correspondant par exemple les écarts calculés lors de l'étape 140 et correspondant au moment d'applicabilité optimal.

Lors de la même étape, le pilote a la possibilité d'accepter ou non, l'application de la consigne au moment d'applicabilité optimal. Lorsque l'application de la consigne est acceptée par le pilote, le plan de vol courant est remplacé par le plan de vol modifié correspondant au moment d'applicabilité optimal de la consigne.

En variante, la consigne est appliquée sans acceptation explicite du pilote. Dans ce cas, le plan de vol courant est remplacé automatiquement par le plan de vol modifié correspondant au moment d'applicabilité optimal de la consigne.

Lors de l'étape 150, le module de traitement 23 détermine si la consigne est d'application immédiate ou non.

Lorsque la consigne est d'exécution immédiate, c'est-à-dire lorsque le moment d'applicabilité optimal de cette consigne est imminent, le module de traitement 23 passe à l'étape 155.

Dans le cas contraire, c'est-à-dire lorsque l'exécution de la consigne est différée, le module de traitement 23 passe à l'étape 160.

Lors de l'étape 155, le module de traitement 23 élabore une commande de pilotage permettant d'exécuter la consigne.

Puis, le module de traitement 23 affiche cette commande de pilotage au pilote qui a la possibilité de commander l'exécution de cette commande ou non.

Lors de l'étape 160, le module de traitement 23 affiche via le module d'affichage 27 une représentation iconifiée et/ou textuelle de la consigne.

Cette représentation est par exemple affichée sur des écrans de navigation latérale et verticale ainsi que sur une échelle de temps.

L'affichage sur l'échelle de temps comprend avantageusement la période d'applicabilité de la consigne et le moment d'applicabilité optimal.

Cette représentation iconifiée est associée aux éléments constituant le plan de vol courant qui est rafraichi dynamiquement.

De plus, cette représentation iconifiée peut varier en fonction du contenu de la consigne.

Ainsi, par exemple, lorsque la consigne concerne un changement d'altitude de l'aéronef 10, la représentation iconifié comprend par exemple un symbole affichant la montée ou la descente de l'aéronef.

Lors de l'étape 170 suivante, le module de traitement 23 surveille toute modification du plan de vol ainsi que des données de fonctionnement et des paramètres opérationnels, et en cas de modification, passe à nouveau à l'étape 115 décrite précédemment.

En particulier, lors de cette exécution de l'étape 115, la compatibilité avec les capacités opérationnelles et avec les contraintes du plan de vol de la même consigne est à nouveau déterminée.

Dans le cas contraire, le module de traitement 23 passe à l'étape 180.

Lors de cette étape 180, le module de traitement 23 vérifie l'échéance du moment d'applicabilité optimal.

Lorsque ce moment d'applicabilité est arrivé, le module de traitement 23 passe à l'étape 155 expliquée précédemment pour élaborer une commande de pilotage permettant d'exécuter la consigne.

Dans le cas contraire, le module de traitement passe à nouveau à l'étape 160.

On conçoit alors que l'invention présente un certain nombre d'avantages.

En particulier, le procédé d'aide au pilotage selon l'invention permet d'assurer un traitement intuitif, rapide, fluide en continuité avec le déroulement du vol de chaque consigne destinée à modifier le plan de vol courant.

Ce traitement ne nécessite l'intervention du pilote que pour l'étape finale afin de confirmer ou non l'exécution de la consigne.

Ce procédé prend en compte les contraintes du plan de vol et les capacités opérationnelles de l'aéronef pour déterminer des moments d'applicabilité de la consigne.

Selon un aspect particulièrement avantageux de l'invention, le procédé permet en outre de déterminer un moment d'applicabilité optimal en prenant en compte par exemple des critères d'optimisation imposées par la compagnie aérienne correspondante.

Toutes ces actions sont effectuées sans intervention du pilote ce qui simplifie le pilotage de l'aéronef et diminue les risques d'erreurs.

Finalement, le procédé selon l'invention propose une représentation intuitive de la consigne à exécution différée ce qui permet au piloter de la repérer et de comprendre son sens de manière particulièrement intuitive.

## Revendications

1. Procédé d'aide au pilotage d'un aéronef (10), l'aéronef (10) comportant un ensemble de systèmes (11) mettant en oeuvre des capacités opérationnelles de l'aéronef (10), l'aéronef (10) effectuant un vol selon un plan de vol, le plan de vol comportant une pluralité de points de passage de l'aéronef (10) et une pluralité de contraintes dans au moins certains
de ces points de passage, le plan de vol étant associé à une pluralité de paramètres opérationnels relatifs au vol et/ou à l'aéronef et prenant des valeurs différentes dans différents points de passage du plan de vol ;
le procédé comportant les étapes suivantes :
- acquisition (110) d'une consigne issue d'un système externe à l'aéronef (10) et destinée à modifier le plan de vol courant de l'aéronef (10) ;
- détermination (115) d'une période d'applicabilité de la consigne constituée d'une pluralité de moments d'applicabilité de la consigne dans lesquels l'application de la consigne est compatible avec les capacités opérationnelles de l'aéronef (10) et avec les contraintes du plan de vol courant de l'aéronef (10), chaque moment d'applicabilité étant défini par rapport à un moment temporel du vol ou par rapport à une position géographique de l'aéronef (10) ;
- pour chaque moment d'applicabilité de la consigne, détermination (130) d'un plan de vol modifié en cas d'application de la consigne dans ce moment d'applicabilité et calcul des valeurs des paramètres opérationnels associés à ce plan de vol modifié ;
- sélection (140) d'un moment d'applicabilité optimal parmi l'ensemble des moments d'applicabilité en fonction des valeurs des paramètres opérationnels associés au plan de vol modifié correspondant à ce moment d'applicabilité et des paramètres opérationnels associés au plan de vol courant.

2. Procédé selon la revendication 1, comprenant en outre une étape (145) de remplacement du plan de vol courant par le plan de vol modifié correspondant au moment d'applicabilité optimal de la consigne.

3. Procédé selon la revendication 1 ou 2, comprenant en outre une étape (145) de notification de la période d'applicabilité de la consigne et du moment d'applicabilité optimal.

4. Procédé selon l'une quelconque des revendications précédentes, comprenant en outre une étape (155) comprenant l'élaboration d'une commande de pilotage permettant d'appliquer la consigne dans le moment d'applicabilité optimal et la notification de la commande de pilotage élaborée.

5. Procédé selon l'une quelconque des revendications précédentes, comprenant en outre une étape (125) de notification d'incompatibilité lorsqu'aucun moment d'applicabilité de la consigne n'a été déterminé lors de l'étape (115) de détermination d'une pluralité de moments d'applicabilité.

6. Procédé selon l'une quelconque des revendications précédentes, dans lequel chaque paramètre opérationnel correspond à l'un des éléments choisis dans le groupe comprenant :
- temps de vol restant ;
- quantité de carburant disponible dans l'aéronef (10) ;
- altitude de l'aéronef (10) ;
- vitesse de l'aéronef (10) ;
- masse de l'aéronef (10).

7. Procédé selon l'une quelconque des revendications précédentes, dans lequel l'étape (140) de sélection d'un moment d'applicabilité optimal comprend le calcul des écarts entre des valeurs des paramètres opérationnels associés à chaque plan de vol modifié et des valeurs des paramètres opérationnels associés au plan de vol courant.

8. Procédé selon la revendication 7, comprenant en outre une étape (145) de notification d'un compte-rendu d'optimisation, le compte-rendu comprenant les écarts entre des valeurs des paramètres opérationnels associés au plan de vol modifié correspondant au moment d'applicabilité optimal et des valeurs des paramètres opérationnels associés au plan de vol courant.

9. Procédé selon l'une quelconque des revendications précédentes, dans lequel l'étape de sélection (140) d'un moment d'applicabilité optimal comprend la vérification d'une pluralité de critères d'optimisation.

10. Procédé selon la revendication 9, dans lequel les critères d'optimisation sont issus d'une base de données (25), les critères d'optimisation étant déterminés par une compagnie aérienne exploitant l'aéronef (10).

11. Procédé selon l'une quelconque des revendications précédentes, dans lequel en cas de modification du plan de vol courant ou des paramètres opérationnels associés à ce plan de vol pour des raisons autres que l'application de la consigne, les étapes du procédé, à l'exception de l'étape (110) d'acquisition d'une consigne, sont à nouveau mises en oeuvre.

12. Produit programme d'ordinateur comportant des instructions logicielles qui, lorsque mis en oeuvre par un équipement informatique, met en oeuvre le procédé selon l'une quelconque des revendications précédentes.

13. Dispositif (17) d'aide au pilotage d'un aéronef(10), l'aéronef (10) comportant un ensemble de systèmes (11) mettant en oeuvre des capacités opérationnelles de l'aéronef (10), l'aéronef (10) effectuant un vol selon un plan de vol, le plan de vol comportant une pluralité de points de passage de l'aéronef (10) et une pluralité de contraintes dans au moins certains de ces points de passage, le plan de vol étant associé à une pluralité de paramètres opérationnels relatifs au vol et/ou à l'aéronef et prenant des valeurs différentes dans différents points de passage du plan de vol ;
le dispositif (17) étant apte à :
- acquérir une consigne issue d'un système externe à l'aéronef (10) et destinée à modifier le plan de vol courant de l'aéronef (10) ;
- déterminer une période d'applicabilité de la consigne constituée d'une pluralité de moments d'applicabilité de la consigne dans lesquels l'application de la consigne est compatible avec les capacités opérationnelles de l'aéronef (10) et avec les contraintes du plan de vol courant de l'aéronef (10), chaque moment d'applicabilité étant défini par rapport à un moment temporel du vol ou par rapport à une position géographique de l'aéronef (10) ;
- pour chaque moment d'applicabilité de la consigne, déterminer un plan de vol modifié en cas d'application de la consigne dans ce moment d'applicabilité et calcul des valeurs des paramètres opérationnels associés à ce plan de vol modifié ;
- sélectionner un moment d'applicabilité optimal parmi l'ensemble des moments d'applicabilité en fonction des valeurs des paramètres opérationnels associés au plan de vol modifié correspondant à ce moment d'applicabilité et des paramètres opérationnels associés au plan de vol courant.

## Patentansprüche

1. Verfahren zur Unterstützung des Steuerns eines Luftfahrzeugs (10), wobei das Luftfahrzeug (10) eine Gruppe von Systemen (11) zur Umsetzen von betrieblichen Fähigkeiten des Luftfahrzeugs (10) aufweist, wobei das Luftfahrzeug (10) einen Flug gemäß einem Flugplan durchführt, wobei der Flugplan eine Mehrzahl von Wegpunkten des Luftfahrzeugs (10) und eine Mehrzahl von Beschränkungen in zumindest gewissen dieser Wegpunkte aufweist, wobei der Flugplan mit einer Mehrzahl von Betriebsparametern, welche den Flug und/oder das Luftfahrzeug betreffen und verschiedene Werte in verschiedenen Wegpunkten des Flugplans annehmen, im Zusammenhang steht,
wobei das Verfahren die folgenden Schritte aufweist:
- Erlangung (110) einer Anweisung, welche von einem System außerhalb des Luftfahrzeugs (10) stammt und dazu bestimmt ist, den aktuellen Flugplan des Luftfahrzeugs (10) zu modifizieren,
- Ermittlung (115) eines Zeitraums der Anwendbarkeit der Anweisung, welcher aus einer Mehrzahl von Momenten der Anwendbarkeit der Anweisung gebildet ist, in welchen die Anwendung der Anweisung kompatibel ist mit den betrieblichen Fähigkeiten des Luftfahrzeugs (10) und mit den Beschränkungen des aktuellen Flugplans des Luftfahrzeugs (10), wobei jeder Moment der Anwendbarkeit in Bezug auf einen zeitlichen Moment des Flugs oder in Bezug auf eine geographische Position des Luftfahrzeugs (10) definiert ist,
- für jeden Moment der Anwendbarkeit der Anweisung, Ermittlung (130) eines modifizierten Flugplans für den Fall der Anwendung der Anweisung in diesem Moment der Anwendbarkeit und Berechnung der Werte der Betriebsparameter, welche mit diesem modifizierten Flugplan zusammenhängen,
- Auswahl (140) eines optimalen Moments der Anwendbarkeit aus der Menge der Momente der Anwendbarkeit in Abhängigkeit von den Werten der Betriebsparameter, welche mit dem modifizierten Flugplan, der mit diesem Moment der Anwendbarkeit korrespondiert, zusammenhängen, und der Betriebsparameter, welche mit dem aktuellen Flugplan zusammenhängen.

2. Verfahren gemäß dem Anspruch 1, ferner aufweisend einen Schritt (145) des Ersetzens des aktuellen Flugplans durch den modifizierten Flugplan, welcher mit dem optimalen Moment der Anwendbarkeit der Anweisung korrespondiert.

3. Verfahren gemäß dem Anspruch 1 oder 2, ferner aufweisend einen Schritt (145) der Mitteilung des Zeitraums der Anwendbarkeit der Anweisung und des optimalen Moments der Anwendbarkeit.

4. Verfahren gemäß irgendeinem der vorstehenden Ansprüche, ferner aufweisend einen Schritt (155) der Erstellung eines Steuerungsbefehls, welcher die Anwendung der Anweisung in dem optimalen Moment der Anwendbarkeit erlaubt, und der Mitteilung des erstellten Steuerungsbefehls.

5. Verfahren gemäß irgendeinem der vorstehenden Ansprüche, ferner aufweisend einen Schritt (125) der Mitteilung einer Inkompatibilität, wenn kein Moment der Anwendbarkeit der Anweisung während des Schritts (115) der Ermittlung einer Mehrzahl von Momenten der Anwendbarkeit ermittelt wurde.

6. Verfahren gemäß irgendeinem der vorstehenden Ansprüche, wobei jeder Betriebsparameter mit einem von Elementen korrespondiert, welche aus der Gruppe ausgewählt sind, die aufweist:
- verbleibende Flugzeit,
- verfügbare Treibstoffmenge im Luftfahrzeug (10),
- Flughöhe des Luftfahrzeugs (10),
- Geschwindigkeit des Luftfahrzeugs (10),
- Masse des Luftfahrzeugs (10).

7. Verfahren gemäß irgendeinem der vorstehenden Ansprüche, wobei der Schritt (140) der Auswahl eines optimalen Moments der Anwendbarkeit die Berechnung von Unterschieden zwischen den Werten der Betriebsparameter, welche mit jedem modifizierten Flugplan zusammenhängen, und den Werten der Betriebsparameter, welche mit dem aktuellen Flugplan zusammenhängen, aufweist.

8. Verfahren gemäß Anspruch 7, ferner aufweisend einen Schritt (145) der Mitteilung eines Berichts einer Optimierung, wobei der Bericht die Unterschiede zwischen den Werten der Betriebsparameter, welche mit dem modifizierten Flugplan, der mit dem optimalen Moment der Anwendbarkeit korrespondiert, zusammenhängen, und den Werten der Betriebsparameter, welche mit dem aktuellen Flugplan zusammenhängen, aufweist.

9. Verfahren gemäß irgendeinem der vorstehenden Ansprüche, wobei der Schritt der Auswahl (140) eines optimalen Moments der Anwendbarkeit die Überprüfung einer Mehrzahl von Optimierungskriterien aufweist.

10. Verfahren gemäß Anspruch 9, wobei die Optimierungskriterien aus einer Datenbank (25) stammen, wobei die Optimierungskriterien durch eine Fluggesellschaft, welche das Luftfahrzeug (10) betreibt, festgelegt sind.

11. Verfahren gemäß irgendeinem der vorstehenden Ansprüche, wobei, im Fall der Modifikation des aktuellen Flugplans oder der zu diesem Flugplan zugehörigen Betriebsparameter aus anderen Gründen als dem der Anwendung der Anweisung, die Schritte des Verfahrens mit Ausnahme des Schritts (110) des Erlangens einer Anweisung erneut durchgeführt werden.

12. Computerprogrammprodukt, welches logische Instruktionen aufweist, welche, bei Ausführung durch eine Hardware, das Verfahren gemäß irgendeinem der vorstehenden Ansprüche umsetzen.

13. Vorrichtung (17) zur Unterstützung des Steuerns eines Luftfahrzeugs (10), wobei das Luftfahrzeug (10) eine Gruppe von Systemen (11) zur Umsetzen von betrieblichen Fähigkeiten des Luftfahrzeugs (10) aufweist, wobei das Luftfahrzeug (10) einen Flug gemäß einem Flugplan durchführt, wobei der Flugplan eine Mehrzahl von Wegpunkten des Luftfahrzeugs (10) und eine Mehrzahl von Beschränkungen in zumindest gewissen dieser Wegpunkte aufweist, wobei der Flugplan mit einer Mehrzahl von Betriebsparametern, welche den Flug und/oder das Luftfahrzeug betreffen und verschiedene Werte in verschiedenen Wegpunkten des Flugplans annehmen, im Zusammenhang steht,
wobei die Vorrichtung (17) eingerichtet ist zum:
- Erlangen einer Anweisung, welche von einem System außerhalb des Luftfahrzeugs (10) stammt und dazu bestimmt ist, den aktuellen Flugplan des Luftfahrzeugs (10) zu modifizieren,
- Ermitteln eines Zeitraums der Anwendbarkeit der Anweisung, welcher aus einer Mehrzahl von Momenten der Anwendbarkeit der Anweisung gebildet ist, in welchen die Anwendung der Anweisung kompatibel ist mit den betrieblichen Fähigkeiten des Luftfahrzeugs (10) und mit den Beschränkungen des aktuellen Flugplans des Luftfahrzeugs (10), wobei jeder Moment der Anwendbarkeit in Bezug auf einen zeitlichen Moment des Flugs oder in Bezug auf eine geographische Position des Luftfahrzeugs (10) definiert ist,
- für jeden Moment der Anwendbarkeit der Anweisung, Ermitteln eines modifizierten Flugplans für den Fall der Anwendung der Anweisung in diesem Moment der Anwendbarkeit und Berechnung der Werte der Betriebsparameter, welche mit diesem modifizierten Flugplan zusammenhängen,
- Auswählen (140) eines optimalen Moments der Anwendbarkeit aus der Menge der Momente der Anwendbarkeit in Abhängigkeit von den Werten der Betriebsparameter, welche mit dem modifizierten Flugplan, der mit diesem Moment der Anwendbarkeit korrespondiert, zusammenhängen, und der Betriebsparameter, welche mit dem aktuellen Flugplan zusammenhängen.

## Claims

1. An aid method for the piloting of an aircraft (10), the aircraft (10) including a set of systems (11) implementing operational capabilities of the aircraft (10), the aircraft (10) performing a flight according to a flight plan, the flight plan including a plurality of waypoints of the aircraft (10) and a plurality of constraints at least at some of these waypoints, the flight plan being associated with a plurality of operational parameters relative to the flight and/or the aircraft and assuming different values at various waypoints of the flight plan;
the method including the following steps:
- acquiring (110) an instruction from a system outside the aircraft (10) and intended to alter the current flight plan of the aircraft (10);
- determining (115) an applicability period of the instruction made up of a plurality of applicability moments of the instruction in which the application of the instruction is compatible with the operational capabilities of the aircraft (10) and with the constraints of the current flight plan of the aircraft (10), each applicability moment being defined relative to a moment in time of the flight or relative to a geographical position of the aircraft (10);
- for each applicability moment of the instruction, determining (130) an altered flight plan in case of application of the instruction at this applicability moment and calculating values of the operational parameters associated with this altered flight plan;
- selecting (140) an optimal applicability moment from among the set of applicability moments based on values of the operational parameters associated with the altered flight plan corresponding to this applicability moment and operational parameters associated with the current flight plan.

2. The method according to claim 1, further comprising a step (145) for replacing the current flight plan with the altered flight plan corresponding to the optimal applicability moment of the instruction.

3. The method according to claim 1 or 2, further comprising a step (145) for notifying the applicability period of the instruction and the optimal applicability moment.

4. The method according to any one of the preceding claims, further comprising a step (155) comprising a piloting command making it possible to apply the instruction in the optimal applicability moment and the notification of the developed piloting command.

5. The method according to any one of the preceding claims, further comprising a step (125) for incompatibility notification when no applicability moment of the instruction has been determined during the step (115) for determining a plurality of applicability moments.

6. The method according to any one of the preceding claims, wherein each operational parameter corresponds to one of the elements chosen from the group comprising:
- remaining flight time;
- quantity of fuel available in the aircraft (10);
- altitude of the aircraft (10);
- speed of the aircraft (10);
- weight of the aircraft (10).

7. The method according to any one of the preceding claims, wherein the step (140) for selecting an optimal applicability moment comprises calculating deviations between values of the operational parameters associated with each altered flight plan and values of the operational parameters associated with the current flight plan.

8. The method according to claim 7, further comprising a step (145) for notifying an optimization report, the optimization report comprising the deviations between values of the operational parameters associated with the altered flight plan corresponding to the optimal applicability moment and values of the operational parameters associated with the current flight plan.

9. The method according to any one of the preceding claims, wherein the step (140) for selecting an optimal applicability moment comprises verifying a plurality of optimization criteria.

10. The method according to claim 9, wherein the optimization criteria come from a database (25), the optimization criteria being determined by an airline operating the aircraft (10).

11. The method according to any one of the preceding claims, wherein, in case of alteration of the current flight plan or operational parameters associated with this flight plan for reasons other than the application of the instruction, the steps of the method, with the exception of the step (110) for acquiring an instruction, are carried out again.

12. A computer program product including software instructions which, when implemented by a computer, implement the method according to any one of the preceding claims.

13. An aid device for the piloting of an aircraft (10), the aircraft (10) including a set of systems (11) implementing operational capabilities of the aircraft (10), the aircraft (10) performing a flight according to a flight plan, the flight plan including a plurality of waypoints of the aircraft (10) and a plurality of constraints at least at some of these waypoints, the flight plan being associated with a plurality of operational parameters relative to the flight and/or the aircraft and assuming different values at various waypoints of the flight plan;
the device (17) is configured for:
- acquire an instruction from a system outside the aircraft (10) and intended to alter the current flight plan of the aircraft (10);
- determine an applicability period of the instruction made up of a plurality of applicability moments of the instruction in which the application of the instruction is compatible with the operational capabilities of the aircraft (10) and with the constraints of the current flight plan of the aircraft (10), each applicability moment being defined relative to a moment in time of the flight or relative to a geographical position of the aircraft (10);
- for each applicability moment of the instruction, determine an altered flight plan in case of application of the instruction at this applicability moment and calculate values of the operational parameters associated with this altered flight plan;
- select an optimal applicability moment from among the set of applicability moments based on values of the operational parameters associated with the altered flight plan corresponding to this applicability moment and operational parameters associated with the current flight plan.
